# EUROPEAN PATENT APPLICATION

(11) **EP 2 204 578 A2**
(43) Date of publication of application: **07.07.2010**
(21) Application number: 09179095.6
(22) Date of filing: 14.12.2009
(51) Int. Cl.: F03D 1/06, F03D 3/06

(54) **Partial arc shroud for wind turbine blades**

(30) Priority: 30.12.2008 US 345705
(71) Applicant: General Electric Company, Schenectady, NY 12345 (US)
(72) Inventor: Kirtley, Kevin, Simpsonville, SC 29681 (US)
(74) Representative: Bedford, Grant Richard

(57) **Abstract**

A wind turbine blade (20) includes an arcuate partial annulus arc shroud (22) secured to a tip of the blade (20)

## Description

The subject matter described here generally relates to fluid reaction surfaces with specific blade structures, and, more particularly, to wind turbines blades having partial arc shrouds.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

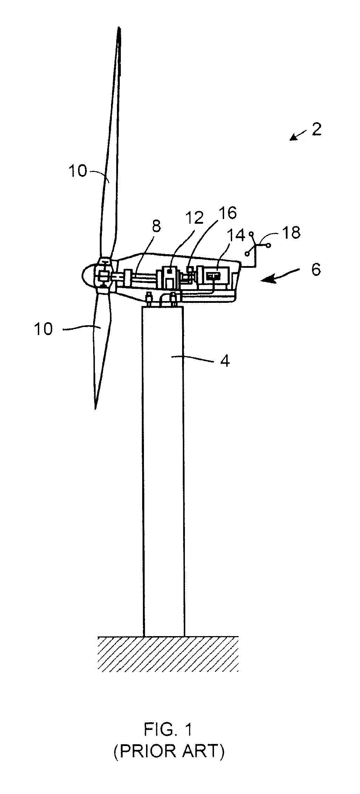

Wind turbines are typically categorized according to the vertical or horizontal axis about which the blades rotate. One so-called horizontal-axis wind generator is schematically illustrated in Figure 1 and available from General Electric Company. This particular "up-wind" configuration for a wind turbine 2 includes a tower 4 supporting a nacelle 6 enclosing a drive train 8. The blades 10 are arranged on a "spinner" or hub 9 to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that may receive input from an anemometer 18.

The blades 10 generate lift and capture momentum from moving air that is them imparted to the rotor as the blades spin in the "rotor plane." Each blade 10 is typically secured to the hub 9 at its "root" end, and then "spans" radially "outboard" to a free, "tip" end. The front, or "leading edge," of the blade 10 connects the forward-most points of the blade that first contact the air. The rear, or "trailing edge," of the blade 10 is where airflow that has been separated by the leading edge rejoins after passing over the suction and pressure surfaces of the blade. A "chord line" connects the leading and trailing edges of the blade 10 in the direction of the typical airflow across the blade and roughly defines the plane of the blade. The length of the chord line is simply the "chord." The generally circular arcuate curve traced by the tips of the rotating blades 10 is referred to as the rotor or blade tip "annulus."

In order to improve performance, wind turbine blades are sometimes provided with "winglets," or out-of-plane extensions that reduce aerodynamic loss by reducing circulation shed from the blade tip. Such winglets typically are extensions of the blade that are bent out-of-the-plane of the blade in the suction side direction or the pressure side direction only. The winglets can also be formed as an arc out of plane or a bend out of plane. U.S. Patent No. 4.329,115 also discloses a flat, circular tip plate at the end of each blade on a down-wind turbine.

Ducted or shrouded wind turbine systems have also been disclosed in various configurations, including those in U.S. Patent Publication No. 2008/0150292. The classical benefit provided by such shrouds is a diffusing action that allows the turbine to operate with a local static pressure gradient across the turbine disk. Operating the turbine in this way allows the turbine to extract more of the wind's kinetic energy than the Betz limit for an unshrouded rotor.

However, the use of such conventional "full annulus arc shrouds" is often avoided in connection with wind turbines because of the structural difficulties associated with implementing the shroud in either a stationary or rotating configuration. For example, in rotating configurations, a rotatable blade tip fixture must be used in order to accommodate blade pitch relative to the fixed shroud. In stationary configurations, the full annulus arc shroud requires supports that create drag and noise.

Various drawbacks associated with such conventional approaches are addressed here in by providing, in various embodiments, a wind turbine blade, including an arcuate partial annulus arc shroud secured to a tip of the blade.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind generator.
FIG. 2 is a schematic front view of a wind turbine rotor.
FIG. 3 is a front view of a tip of the wind turbine blade in FIG. 2.
FIG. 4 is a cross-sectional view taken along section line IV-IV in FIG. 3.
FIG. 5 is a top view of a tip of the wind turbine blade in Fig 2.

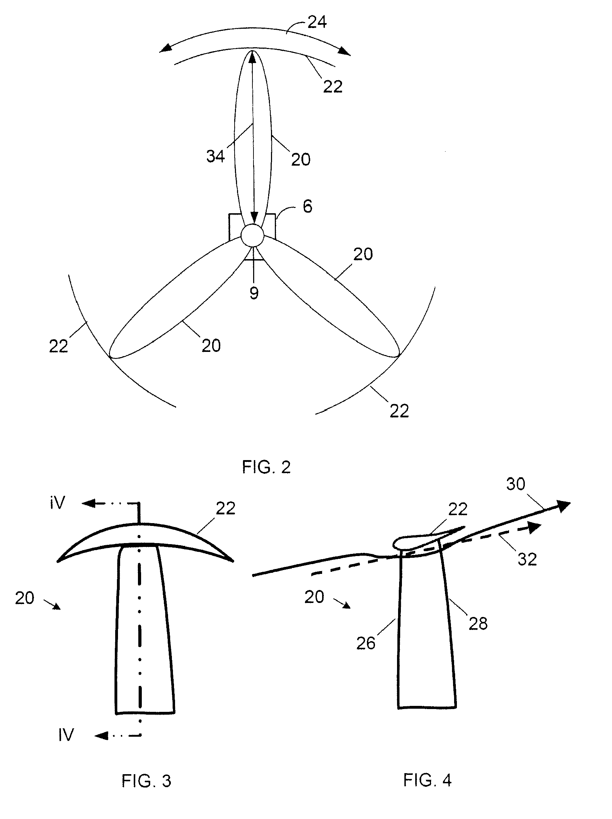

FIG. 2 is schematic front view of a rotor for use with the wind turbine 2 shown in FIG. 1 and/or any other wind turbine. For example, the blades 20 shown in FIG. 2 may be used to replace the blades 10 shown in FIG. 1. The blades 10 may also be retrofitted with the arc shrouds 22.

Each of the blades 20 is provided with an arcuate arc shroud 22 that curves partially around the blade tip annulus resulting in a gap between adjacent arc shrouds. The partial arc shroud 22 extends a finite length into the direction of blade rotation and a finite length away from the direction of blade rotation. However, some or all of the arc shrouds 22 may also connect without a gap between adjacent arc shrouds. Alternatively, a single blade 20 may also be provide with a full annulus arc shroud that extends around substantially the entire blade tip annulus.

Each of the illustrated partial annulus arc shrouds 22 is secured at or near a tip of the corresponding blade 20. However, the arc shrouds 20 may also be secured in an other way, including to other portions of the blade 20, the rotor, and/or other portions of the wind turbine 2. As illustrated in FIG. 3, the illustrated arc shroud 20 extends substantially the same length from both a pressure side of the blade and a suction side of the blade 20. However, the arc shrouds 22 may also extend different lengths from the pressure and suction sides of any of the blades 20. Although the shroud 22 illustrated in FIG. 3 has an arcuate shape in the direction of rotation generally corresponding to the shape of the blade tip annulus, other curved and/or linear shapes may also be used. Each of the arc shrouds 22 may also have a unique configuration as compared to the other arc shrouds.

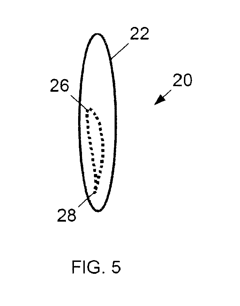

As illustrated in FIG. 4, the illustrated arc shroud 22 may extend the same or different lengths forward of the leading edge 26 of the blade and/or rearward of the trailing edge 28 of the blade 20. As illustrated in FIGs. 3 and 5, the arc shroud 22 may also extend the same or different lengths laterally of the leading edge 26 of the blade and/or trailing edge 28 of the blade 20. The arc shroud 22 may be further provided with an airfoil shape in the direction of flow. The streamline shape provides a gradient due to streamline curvature 30 that increases local energy capture through acceleration as compared to the streamline gradient 32 without the arc shroud 22.

The arc shroud 22 may have a variety of airfoil shapes. For example, the cross-section illustrated in FIG. 4 includes a blade-like shape with a chord that is angled relative to the rotor axis. In the illustrated configuration, the chord is angled so that the upwind edge of the arc shroud 22 has a smaller radius than the downwind edge of the arc shroud. However, the chord of the arc shroud 22 may also be arranged substantially parallel to the rotor axis and/or angled so that the upwind edge of the arc shroud 22 has a larger radius than the downwind edge of the arc shroud. The thickness of the arch shroud 10 may also be arranged so that regardless of its chord angle relative to the rotor axis, the inboard surface of the arch shroud 22 is provided with an upwind edge that has a smaller (or larger) radius than the downwind edge of the arc shroud.

Alternatively, or in addition, as illustrated in FIG. 4, the arc shroud 22 may be further provided with an inboard surface that is shaped similar to the internal surface of a Venturi tube, such as a Herschel-type Venturi tube. In this configuration, the inboard side of the arc shroud 22 will initially constrict the flow from its upwind edge toward the rotor and then allow that flow to expand away from the rotor as the air flows toward the downstream edge of the arch shroud. For example, the leading edge 26 or center of the blade may be arranged at or near the point corresponding to maximum restriction in the Venturi shape. The arc shroud 22 may also be tapered and/or twisted towards its upwind, downwind and/or lateral tips to improve aerodynamic efficiency. For example, although FIG. 5 illustrates a generally oval lateral taper, other taper configurations may also be used.

Each of the illustrated partial annulus arc shrouds 22 may have the same or different arc lengths 24. Each of those arc lengths 24 may be expressed as a fraction or percentage of the total blade tip annulus or the blade span 34. For example, suitable results are expected to be achieved when the arc length of the partial annulus arc 22 shroud is in a range between 10% and 1.5% of a span 34 of the blade 20, or a narrower range of between 5% and 1.75% of a span of the blade, and an even narrower range of between 3.5% and 2% of a span of the blade. Suitable results are also expected to be obtained when the total length of all of the arc shrouds 24 extends between 10% and 1.5% of the blade tip annulus of the wind turbine 2, or a narrower range of between 5% and 1.75% of the blade tip annulus of the wind turbine, or an even narrower range of between 3.5% and 2% the a blade tip annulus of the wind turbine.

The technology described above offers various advantages over conventional approaches. The shroud 22 directs more incoming wind into the rotor plane for greater capture of available energy from the wind from the aerodynamic circulation formed around the shroud 22. This enables increased power extraction by increasing the actual capture area of the incoming wind. For a given aerodynamic efficiency of power extraction, more available energy through larger capture area will directly result in greater power generation.

Since only the blade extracts the energy, the arc shroud 22 only needs to produce the desired effect local to the blade 20 rather than operate over the full annulus arc. Further benefit can then be derived from the streamline curvature of the shroud 22 in the neighborhood of the blade 20 tip due to the airfoil shape of the shroud. This local streamline curvature produces lower static pressures near the blade tip trailing edge than the ambient pressure and allows more wind kinetic energy to be extracted than the classical Betz limit in the neighborhood of the tip. This configuration also allows a short chord blade to function more like a longer chord, higher solidity blade. Additionally, the shed circulation from the blade tip is reduced from an end-plate effect formed by the shroud 22. Consequently, lower tip losses are achieved in addition to the improved energy extraction. The arcuate shape of the arc shroud 22 helps to align with the incoming relative wind in order to reduce grag and improve aerodynamic efficiency.

The partial arc shroud is increases power extraction by managing the local streamline curvature and pressure gradients and blade circulation shed at the tip. Extent, taper, airfoil section, and local twist are free parameters to optimize the power extraction. The partial arc shroud is also enhanced for cost, manufacturability, and aerodynamic load. Various embodiments of the invention will yield increased annual energy production (AEP) with the potential for decreased loads with respect to an equivalent power unshrouded blade. Increased power, capacity factor, reduced cost of electricity, and lower cut-in speeds are all provided by this design.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are defined by the following numbered clauses
1. A wind turbine blade, comprising an arcuate partial annulus arc shroud secured to a tip of the blade.
2. The wind turbine blade recited in clause 1 wherein an upwind portion of an inboard side of the partial annulus arc shroud has a smaller radius than a down wind portion of the arc shroud.
3. The wind turbine blade recited in any preceding clause, wherein an arc length of the partial annulus arc shroud is between 10% and 1.5% of a span of the blade.
4. The wind turbine blade recited in any preceding clause, wherein an arc length of the partial annulus arc shroud is between 5% and 1.75% of a span of the blade.
5. The wind turbine blade recited in any preceding clause, wherein an arc length of the partial annulus arc shroud is between 10% and 1.5% of a span of the blade.
6. The wind turbine blade recited in any preceding clause, wherein an arc length of the partial annulus arc shroud is between 5% and 1.75% of a span of the blade.
7. The wind turbine blade recited in any preceding clause, wherein the partial annulus arc shroud extends substantially the same length from both a pressure side of the blade and a suction side of the blade.
8. The wind turbine blade recited in any preceding clause, wherein the partial annulus arc shroud extends substantially the same length from both a pressure side of the blade and a suction side of the blade.
9. The wind turbine blade recited in any preceding clause, wherein the partial annulus arc shroud extends substantially the same length from both a pressure side of the blade and a suction side of the blade.
10. The wind turbine blade recited in any preceding clause, wherein the partial annulus arc shroud extends substantially the same length from both a pressure side of the blade and a suction side of the blade.
11. The wind turbine blade recited in any preceding clause, wherein the partial annulus arc shroud has an airfoil shape.
12. A wind turbine, comprising:
   a tower supporting a drive train having a gearbox and a generator;
   a plurality of blades for rotating the drive train; and
   an arcuate partial annulus arc shroud secured to a tip of at least one of the blades.
13. The wind turbine recited in clause 12, wherein an upwind portion of an inboard side of the partial annulus arc shroud has a smaller radius than a down wind portion of the arc shroud.
14. The wind turbine recited in clause 12 or 13, wherein the partial annulus arc shroud has an airfoil shape
15. The wind turbine blade recited in any of clauses 12 to 14, wherein the partial annulus arc shroud extends forward of a leading edge of the blade.
16. The wind turbine blade recited in any of clauses 12 to 15, wherein the partial annulus arc shroud extends beyond a trailing edge of the blade.
17. The wind turbine recited in any of clauses 12 to 16, wherein an arc length the partial arc shrouds is between 10% and 1.5% of a span of the corresponding blade
18. The wind turbine blade recited in any of clauses 12 to 17, wherein an arc length of each of the partial arc shrouds is between 5% and 1.75% of a span of the corresponding blade.
19. The wind turbine blade recited in any of clauses 12 to 18, wherein the combined length of the arc shrouds extends between 10% and 1.5% of a blade tip annulus of the wind turbine.
20. The wind turbine blade recited in any of clauses 12 to 19, wherein the combined length of the arc shrouds extends between 5% and 1.75% of a blade tip annulus of the wind turbine.

## Claims

1. A wind turbine blade (20), comprising an arcuate partial annulus arc shroud (22) secured to a tip of the blade (20).

2. The wind turbine blade (20) recited in claim 1 wherein an upwind portion of an inboard side of the partial annulus arc shroud (22) has a smaller radius than a down wind portion of the arc shroud (22).

3. The wind turbine blade (20) recited in any of the preceding claims, wherein an arc length (24) of the partial annulus arc shroud (22) is between 10% and 1.5% of a span (34) of the blade (20).

4. The wind turbine blade (20) recited in any of the preceding claims, wherein an arc length (24) of the partial annulus arc shroud is between 5% and 1.75% of a span (34) of the blade (20).

5. The wind turbine blade (20) recited in any of the preceding claims, wherein an arc length (24) of the partial annulus arc shroud (22) is between 10% and 1.5% of a span (34) of the blade (20).

6. The wind turbine blade (20) recited in any of the preceding claims, wherein the partial annulus arc shroud (22) extends substantially the same length from both a pressure side of the blade (20) and a suction side of the blade (20).

7. The wind turbine blade (20) recited in any of the preceding claims, wherein the partial annulus arc shroud (22) has an airfoil shape.

8. A wind turbine (2), comprising:
a tower (4) supporting a drive train (8) having a gearbox (12) and a generator (14);
a plurality of blades (20) for rotating the drive train (8); and
an arcuate partial annulus arc (22) shroud secured to a tip of at least one of the blades (20).

9. The wind turbine recited in claim 8, wherein an upwind portion of an inboard side of the partial annulus arc shroud (22) has a smaller radius than a down wind portion of the arc shroud (22).

10. The wind turbine recited in any of claims 8-9, wherein the partial annulus arc shroud (22) has an airfoil shape.

11. The wind turbine blade recited in any of claims 8-10, wherein the partial annulus arc shroud (22) extends forward of a leading edge (26) of the blade (20).

12. The wind turbine blade recited in any of claims 8-11, wherein the partial annulus arc shroud (22) extends beyond a trailing edge (28) of the blade (20).

13. The wind turbine recited in any of claims 8-12, wherein an arc length (24) the partial arc shroud (22) is between 10% and 1.5% of a span (34) of the corresponding blade (20).

14. The wind turbine blade recited in any of claims 8-13, wherein an arc length of each of the partial arc (22) shroud is between 5% and 1.75% of a span (34) of the corresponding blade (20).

15. The wind turbine blade recited in claim 8-14, wherein the combined length of the arc shroud (22) extends between 5% and 1.75% of a blade tip annulus of the wind turbine (2).
